# EUROPEAN PATENT SPECIFICATION

(11) **EP 1 943 816 B1**
(45) Date of publication and mention of the grant of the patent: **05.10.2011**
(21) Application number: 06791445.7
(22) Date of filing: 05.10.2006
(51) Int. Cl.: H04M 1/06, H04M 1/654

(54) **RETROFIT SWITCH ACTIVATED HANDSET LIFTER**
DURCH NACHAUSSTATTUNGS-SCHALTER AKTIVIERTE HANDAPPARAT-HEBEVORRICHTUNG
MANOEUVRE DE PRISE DE LIGNE DE COMBINE TELEPHONIQUE ACTIONNE PAR UN COMMUTATEUR DE RETROCOMPATIBILITE

(30) Priority: 07.10.2005 US 724732 P
(43) Date of publication of application: 16.07.2008
(73) Proprietor: GN Netcom A/S, 2750 Ballerup (DK)
(72) Inventor: LUCEY, Robert, E., Sudbury, MA 01766 (US)
(74) Representative: Larsen, Hans Ole
(86) International application number: PCT/DK2006/000554
(87) International publication number: WO 2007/042030

(56) References cited:
- US-A- 5 694 467
- US-A- 5 758 289
- US-A1- 2004 131 174

## Description

### Field of the Invention

The present invention is directed generally to a telephone headset apparatus and more particularly to a manually switch activated handset lifter apparatus which can be retrofitted to existing telephone sets without modification.

### Background

Communication systems for interconnection of a headset or other receiver with telephone systems are well known. Wireless systems add a new dimension to the use of specialized and report receivers interconnected into telephone, including Voice over IP (VoIP) networks. Such systems include a fixed transceiver which is connected to a telephone line with associated hardware to relay signals to and from a remote device. Wireless systems allow substantial freedom of movement during a telephone conversation since the user is not anchored to a telephone cord line. Such wireless systems typically include a base station inserted between the handset and the telephone itself, in effect tapping off the audio signals for transmission to and from the headset. Because the handset remains indirectly connected to the telephone via the wireless base that may contain switching circuits for selecting wireless headset or handset, the user still retains the ability to use the both the original handset and the wireless device.

In many cases, the user may be located near the telephone set (e.g. to make an outgoing call from the telephone keypad), in which case the user could manually lift the handset to initiate the phone call. However, this may be an inconvenience, as it also requires the user to manually replace the handset at the end of the call.

US patent no. 5,758,289 A shows a telephone system with a telephone set having a base unit, a handset of a corded telephone set and a handset of a cordless telephone set. Further, it comprises a handset (relay) lifter on the corded telephone set. In the signal line between the basic body of the cordless telephone set and the relay lifter, an aural signal, a detection signal from a vibration sensor circuit, a position detector and a control signal for controlling the driving motor in the relay lifter are included. This means that the telephone set is modified directly before the relay lifter in order to be able to work in connection with an ordinary low price cordless telephone set, as required.

### Summary of the Invention

Generally, the present invention relates to a system and method of retrofitting an existing telephone set to have a lifter responsive to a switch and being able to install such equipment onto such existing phone set without material modification thereof.

For example, there is disclosed a method of retrofitting a telephone set having a base unit, a handset, a handset cord connecting the handset to the base unit, and an electrically responsive handset lifter, having the steps of: electrically connecting the handset to the base unit via said handset cord through the lifter; and electrically connecting a lifter up/down actuator in said handset cord; and the configuring said lifter to sense the signal from said actuator through said headset cord with quick disconnect and thereby lifting or lowering the handset in response thereto.

There is also disclosed a system for retrofitting a telephone set for remotely actuating a handset lifter, said telephone set having a base unit, a handset, a handset cord configured to carry audio signals between said base unit and said handset, and a lifter, which includes a command unit for configured to issue an actuation signal to said lifter, said unit being configured to transmit said actuation signal along said audio signal wires in said handset cord, and a sensor associated with said lifter and in circuit with said wires in said handset cord, for detecting said actuation signal from said unit and configured to reject audio signals carried on said wires, and passing said actuation signal through to said lifter for lifting and replacing the handset in response to said command unit.

Numerous other inventive concepts and embodiments are disclosed and claimed in this document. This summary does not endeavor to touch on all of them. Reference should be had to the full specification and claims.

### Brief Description of the Drawings

The invention may be more completely understood in consideration of the following detailed description of various embodiments of the invention in connection with the accompanying drawings, in which:

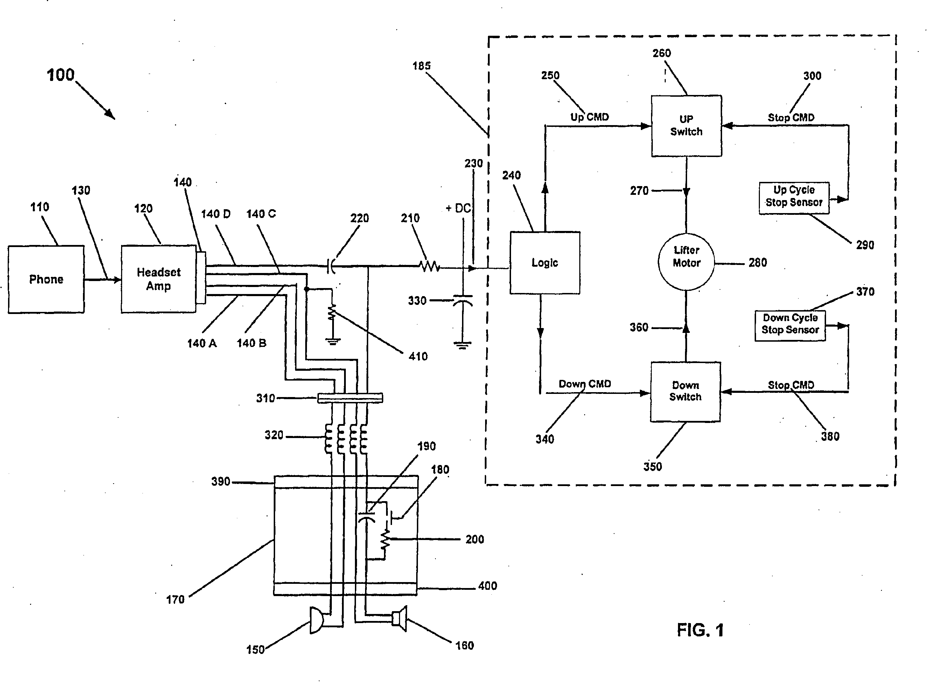

FIG. 1 depicts a functional block diagram of the circuitry to implement a push button activated handset lifter apparatus.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives as defined by the appended claims.

### Detailed Description

In general, the present invention is directed to a system, method and apparatus of a push button activated handset lifter device. It is well known that wireless or wired telephone headsets and associated amplifiers normally tap the analog line of a telephone handset rather than the line cord. The advantage of this arrangement is that, particularly, in digital telephone sets, the proprietary codes used by each set manufacturer need not be known. Furthermore, tapping into the line cord, means that the headset must be a complete phone, not just a handset replacement and the features of the telephone set would also have to be replicated.

A convenient way to allow the user to take the phone off hook (i.e. raise the handset so that the headset system will able to intercept the voice signals) is to provide a manual system for direct actuation of the lifter system which can be added to the analog handset line. This may be in addition to some wireless or other lifter actuator, such as a switch on the lifter, etc. By adding the switch in the handset line, it makes it simple to retrofit any telephone with connectors (usually the RJ modular type) and no further retrofit of the phone is required.

A functional block diagram embodiment of a push button activated, headset lifter system 100 is depicted in FIG. 1. A top level overview of the system operation follows. A standard office telephone 110 connected to a handset jack is connected to headset amplifier unit 120 by interconnect cable 130. The headset amplifier unit 120 has modular jack 140 shown with 4 leads, 140 A thru 140 D, exiting the connector jack 140. Leads 140 A & 140 B carry audio signals generated by the microphone unit 150 en route to the telephone 110, whereas, leads 140 C & 140 D carry audio signals from the phone 110 destined for the headset speaker 160. The push-button activation unit 170 houses, among other things, the user activated push-button 180, whose output signal controls the phone handset lifter unit 185. In this environment, the headset wearer can both answer (pick-up) and terminate (hang-up) phone calls without having to physically interact with the phone handset.

A problem would arise in the use of a simple push button (make/break) connected to circuitry to raise and lower the handset. An audio (such as a voice) signal, which is simultaneously carried on the line may appear to mimic a signal which the lifting/lowering circuit would see as a signal to initiate such action. Such a false actuation would render the system unreliable.

To prevent this, create a band pass filter which is configured to block audio signals which may appear as trigger signals. An example of such a signal might be the loud signal used in US telephone system to indicate that a user has left the handset off hook for a predetermined period of time, about 30 seconds. Of course it is necessary to select a bandpass value which is such that it does not interfere with normal audio signals in the narrow voice frequencies and amplitudes which the listener needs to receive.

Now, a more detailed examination. When the user hears the phone 110 ringing with an incoming call, the user may initiate lifting the phone handset and accepting the call by depressing the manual actuation command unit (in this embodiment a push button, though it could be many type of signal generators) 180 for a predetermined time period, say more than generally 100 milliseconds and less than 2 seconds. The 100 ms wait time is not an absolute. It could be 25 or 50 ms, for example, but the longer the time, the more likely undesirable transient signals will be rejected. The 2 second maximum is likewise not an essential upper end. 0.5 or 1 second, for example could also be selected. The objective is for a human user to hold the switch engaged long enough to send a signal which is clearly not a transient and short enough to be convenient. When push button 180 is closed, resistor 200 discharges capacitor 190 so that current can be drawn through resistor 210, which in turn activates the up logic circuitry.(capacitor 220 blocks the + DC from entering the headset amp 120). The discharging signal 230 is received and analyzed by logic circuit 240. An active signal generator could be substituted for manual command unit 180 and associated RC circuitry. In the present case a declining exponential pulse is generated with a high peak to make it easily distinguishable from a similar audio signal (although it the preferred embodiment, such signals will be substantially filtered). It is possible to use other, even more distinguishable wave forms, such as square wave pulses, specific analog patterns or even digitally encoded ID signals which can be fully separated from audio. The preferred method recognizes the cost advantages of a simple RC network.

If the logic circuit 240 determines the discharging signal 230 meets the predetermined criterion (time window) to initiate a call answer-i.e. lift UP signal (again, at time delay of more than 100 milliseconds and less than 2 seconds in duration), the logic circuit 240 will output an up command 250 which in turn activates the up switch 260 allowing current 270 to flow through the lifter motor 280 in the appropriate direction to begin physically lifting the phone handset. The lifter motor 280 may lift the phone handset until the Up Cycle Stop Sensor 290 senses the handset has reached a predetermined height (which may be determined by any number of sensor devices known in the art) and may then initiate a stop command 300 which may disengage the up switch 260 and halt the lifter motor 280. With the handset now lifted (i.e. off hook state) above the threshold to allow for an incoming call to be received, the audio signal exits the phone 110 and traverses interconnect cable 130 to the headset amplifier 120. The incoming audio signal is then routed from the headset amp 120 as a differential output signal applied to leads 140 C & 140 D. The audio signal on leads 140 C & 140 D traverses in order the headset connector 310, coiled wire 320, and the push-button activation unit 170 en route to headset speaker unit 160. Wherein, capacitor 220 on wire lead 140 D serves as a coupling capacitor to pass the audio signal and block D.C. and/or transient discharging signals 230 generated by the push-button activation unit 170 as explained earlier, and resistor 410 on wire lead 140 C has a sufficiently large resistance, typically much greater than 300 ohms, so as not load down the audio signal en route to speaker 160. And furthermore, the low pass filter circuitry comprised of resistor 210 and capacitor 330 shunts the audio signal on lead 140 D to ground just prior to the phone handset lifter unit 185, thereby ensuring the audio signal might not inadvertadly trigger the logic unit 240 to issue an erroneous handset up/down command.

Note that a digital (i.e., non-analog) version of this system is possible. The RC circuit would be replaced by known switching circuits with timers.

Similarly, the user can hang-up and terminate phone calls by depressing the same push button 180 used to pick-up the original call. In this scenario, when the user wishes to terminate the call and replace the handset to its resting "down" position, the user may depress the push button 180 for a predetermined time period, say greater than 200 milliseconds (ms), but there are other options. The UP signal could be say 100 ms to 2 sec (or others as mentioned above) and a DOWN signal could be issued when the switch is activated for longer than the down signal (in this case > 2 second). Another scenario is the UP and DOWN signals are of the same length (for example >100ms ,<2 seconds, but toggle between up and down. This is a simpler construction but can be a bit confusing for the user. As before, this action discharges the energy stored in capacitor 190 through resistors 200 and 210, (capacitor 220 blocks the discharging signal from entering the headset amp 120). The discharging signal 230 is received and analyzed by logic circuit 240.

If the logic circuit 240 determines the discharging signal 230 meets the predetermined criterion to initiate a call hang-up (time period greater than 2 ms in duration), the logic circuit 240 will output a down command 340 which in turn activates the down switch 350 allowing current 360 to flow through the lifter motor 280 in the appropriate direction to begin physically lowering the phone handset. The lifter motor 280 may then lower the phone handset until the Down Cycle Stop Sensor 370 senses the handset has reached a predetermined height and may then initiate a stop command 380 which may disengage the down switch 260 and halt the lifter motor 280. In the example described above, the DOWN signal is inhibited during the lifting of the headset, and similarly, the UP signal is inhibited while the lifter device 100 is going down. This may, for example, ensure that the user does not mistakenly terminate a call pick-up by inadvertently hitting the push button 180 while the lifter is raising the handset.

The above embodiment describes the push button activated, headset lifter device 100 utilizing analog electronics. A digital embodiment can also be envisioned where, for example, the logic circuit 240 in digital format may be programmed to recognize a single depression of the push button 180 as a request to answer the phone 110 when ringing, and a rapid sequence of two or more depressions of the push button 180 to signal a request to terminate the call and hang up. Many other variations can also be envisioned, for example a hybrid system part analog/part digital wherein the discharging signal via capacitor 190 may be digitized within the push button activation unit 170, prior to transmission to a digital logic unit 240.

Another important feature of the present invention are the quick disconnect connectors 390 and 400 as incorporated in the push button activation unit 170.

These quick disconnect connectors may allow for the push button activation unit 170 to be easily retro-fitted into pre-existing telephone headset systems originally sold without the push-button activated call answering/call hang-up capability.

As noted above, the present invention is applicable to telephone headset systems and is believed to be particularly useful for a quick disconnect push button activated headset lifter apparatus. The present invention should not be considered limited to the particular examples described above, but rather should be understood to cover all aspects of the invention as fairly set out in the attached claims. Various modifications, equivalent processes, as well as numerous structures to which the present invention may be applicable will be readily apparent to those of skill in the art to which the present invention is directed upon review of the present specification. The claims are intended to cover such modifications and devices.

## Claims

1. A method of retrofitting a telephone set (110) having a base unit, a handset, a handset cord connecting the handset to the base unit, and an electrically responsive handset lifter, comprising the steps of:
a. electrically connecting the handset to the base unit via said handset cord through the lifter;
b. electrically connecting a lifter up/down actuator (185) in said handset cord,
**characterized in that** the lifter is configured to sense the signal from said actuator through audio signal wires in said handset cord and thereby lifting or lowering the handset in response thereto.

2. The method according to claim 1 further including the step of:
filtering signals received by said lifter coming through said handset to attenuate voice signals which would mimic the actuation signal, so that voice signals do not cause false actuation of said lifter.

3. The method of claim 2 wherein said filtering step includes the step of shunting audio signals prior to entering said lifter.

4. The method of claim 2 wherein said filtering step includes band pass filtration of audio signals.

5. The method of claim 2 wherein said filtering step includes a time delay circuit for rejecting transient signals which appear during the time delay.

6. The method of claim 5 wherein said filtering step includes a time window in which the lifter is permitted to sense an actuation signal.

7. The method of claim 1 further including the step of configuring the lifter to reject any signal which does not meet specific criteria for actuation.

8. The method of claim 7 wherein said specific criteria are signals not generally shorter than a first predetermined time and not greater than a second predetermined time span.

9. The method of claim 7 wherein said specific criteria are a first signals not generally shorter than a first predetermined time and not greater than a second predetermined time span, to initiate a command to accuate said lifter in one direction and a second signal of length longer than said second predetermined time to actuate said lifter in another direction.

10. A system for retrofitting a telephone set (110) for remotely actuating a handset lifter, said telephone set having a base unit, a handset, a handset cord configured to carry audio signals between said base unit and said handset, and a lifter, comprising:
a lifter up/down actuator configured to issue an actuation signal to said lifter, said unit being configured to transmit said actuation signal along audio signal wires in said handset cord:
**characterized in** a sensor being connected to said lifter and in circuit with said wires in said handset cord, for detecting said actuation signal from said actuator and configured to reject audio signals carried on said wires, and passing said actuation signal through to said lifter for lifting and replacing the handset in response to said lifter up/down actuator.

11. The system of claim 10 wherein said sensor in said lifter includes a band pass filter.

12. The system of claim 1 wherein said sensor includes a filter which passes a pulse of generally not less than predetermined time to block transient signals.

13. The system of claim 10 wherein said sensor includes a first filter capable of sensing a predetermined minimum time delay to reject signals of duration shorter than said delay and a second maximum signal duration to reject signals of duration longer than a second predetermined maximum time span, so that only signals of duration falling within said predetermined minimum and maximum times will be passed to said lifter.

14. The system of claim 10 wherein said sensor includes a first filter capable of sensing a predetermined minimum time delay to reject signals of duration shorter than said delay and a second maximum signal duration to operate said lifter in one direction in response to a signal longer than said minimum and shorter than said maximum, and a second filter to actuate said lifter in another direction for signals longer than said maximum, so that signals of different duration will result in selective up and down actuation of the lifter in response to signal duration.

15. The system of claim 14 wherein said minimum time is generally 20 ms and said maximum time generally not more than 200 milliseconds.

## Patentansprüche

1. Verfahren zum Nachrüsten eines Telefongerätes (110), das eine Basiseinheit, einen Hörer, ein Hörerkabel, das den Hörer mit der Basiseinheit verbindet, und eine elektrisch ansprechende Hörerhebeeinrichtung enthält, umfassend folgende Schritte:
a. elektrisches Verbinden des Hörers mit der Basiseinheit über das Hörerkabel durch die Hebeeinrichtung,
b. elektrisches Anschließen eines Hebeeinrichtungs-Aufwärts-/Abwärtsbetätigungselementes (185) in der Hörerschnur,
**dadurch gekennzeichnet, dass** die Hebeeinrichtung dazu eingerichtet ist, das Signal von dem Betätigungselement durch Audiosignaldrähte in dem Hörerkabel zu erfassen und **dadurch** den Hörer in Erwiderung darauf anzuheben oder abzusenken.

2. Verfahren nach Anspruch 1, weiterhin enthaltend den Schritt des Filterns von Signalen, die von der Hebeeinrichtung empfangen werden und durch den Hörer gelangen, um Sprachsignale zu dämpfen, die das Betätigungssignal imitieren würden, so dass Sprachsignale keine Fehlbetätigung der Hebeeinrichtung verursachen.

3. Verfahren nach Anspruch 2, bei dem der Filterungsschritt den Schritt des Shuntens von Audiosignalen vor dem Eintritt in das Filter umfasst.

4. Verfahren nach Anspruch 2, bei dem der Filterungsschritt eine Bandpassfilterung von Audiosignalen beinhaltet.

5. Verfahren nach Anspruch 2, bei dem der Filterungsschritt einen Zeitverzögerungskreis zum Zurückweisen von Übergangssignalen beinhaltet, die während der Zeitverzögerung auftreten.

6. Verfahren nach Anspruch 5, bei dem der Filterungsschritt ein Zeitfenster umfasst, in dem es der Hebeeinrichtung gestattet ist, ein Betätigungssignal zu erfassen.

7. Verfahren nach Anspruch 1, weiterhin umfassend den Schritt des Konfigurierens der Hebeeinrichtung, um jedes Signal zurückzuweisen, das spezielle Kriterien für die Betätigung nicht erfüllt.

8. Verfahren nach Anspruch 7, bei dem die speziellen Kriterien Signale sind, die nicht generell kürzer sind als eine erste festgelegte Zeitspanne und nicht länger sind als eine zweite vorbestimmte Zeitspanne.

9. Verfahren nach Anspruch 7, bei dem die speziellen Kriterien ein erstes Signal, das nicht generell kürzer ist als eine erste vorbestimmte Zeitspanne und nicht länger ist als eine zweite vorbestimmte Zeitspanne, um einen Befehl zu initiieren, um die Hebeeinrichtung in einer Richtung zu betätigen, und ein zweites Signal sind, das länger ist als die zweite vorbestimmte Zeitspanne, um die Hebeeinrichtung in der anderen Richtung zu betätigen.

10. System zum Nachrüsten eines Telefongerätes (110) zum entfernten Betätigen einer Hörerhebeeinrichtung, wobei das Telefongerät eine Basiseinheit, einen Hörer, ein Hörerkabel, das dazu eingerichtet ist, Audiosignale zwischen der Basiseinheit und dem Hörer zu übermitteln, und eine Hebeeinrichtung hat, enthaltend:
ein Hebeeinrichtungs-Aufwärts-/Abwärtsbetätigungselement, das dazu eingerichtet ist, ein Betätigungssignal an die Hebeeinrichtung auszugeben, wobei diese Einheit dazu eingerichtet ist, das Betätigungssignal über Audiosignaldrähte in dem Hörerkabel zu senden;
**gekennzeichnet durch** einen Sensor, der mit dem Filter verbunden und mit den Drähten in dem Hörerkabel verschaltet ist, um das Betätigungssignal von dem Betätigungselement zu erfassen, und dazu eingerichtet ist, Audiosignale zurückzuweisen, die über die Drähte übermittelt werden, und das Betätigungssignal **durch** das Filter zu leiten, um den Hörer in Erwiderung auf das Hebeeinrichtungs-Aufwärts-/Abwärtsbetätigungselement anzuheben und wieder aufzulegen.

11. System nach Anspruch 10, bei dem der Sensor in der Hebeeinrichtung ein Bandpassfilter enthält.

12. System nach Anspruch 11, bei dem der Sensor ein Filter enthält, das einen Impuls weiterleitet, der generell nicht kürzer ist als eine vorbestimmte Zeit, um Übergangssignale zu blockieren.

13. System nach Anspruch 10, bei dem der Sensor ein erstes Filter enthält, das in der Lage ist, eine vorbestimmte minimale Zeitverzögerung, um Signale einer Dauer zurückzuweisen, die kürzer ist als die Verzögerung, und eine zweite maximale Signaldauer zu erfassen, um Signale einer Dauer zurückzuweisen, die länger ist als eine zweite vorbestimmte maximale Zeitspanne, so dass lediglich Signale einer Dauer zu dem Filter weitergeleitet werden, die zwischen der vorbestimmten minimalen und maximalen Zeit liegt.

14. System nach Anspruch 10, bei dem der Sensor ein erstes Filter enthält, das in der Lage ist, eine vorbestimmte minimale Zeitverzögerung, um Signale einer Dauer zurückzuweisen, die kürzer ist als die Verzögerung, und eine zweite maximale Signaldauer zu erfassen, um die Hebeeinrichtung in einer Richtung in Erwiderung auf ein Signal zu betätigen, das länger ist als das Minimum und kürzer ist als das Maximum, und ein zweites Filter, um die Hebeeinrichtung in einer anderen Richtung für Signale zu betätigen, die länger sind als das Maximum, so dass Signale unterschiedlicher Dauer zu einer selektiven Aufwärts- und Abwärtsbetätigung der Hebeeinrichtung in Erwiderung auf die Signaldauer führen.

15. System nach Anspruch 14, bei dem die minimale Zeit im allgemeinen 20 ms und die maximale Zeit im allgemeinen nicht mehr als 200 ms beträgt.

## Revendications

1. Procédé de rééquipement d'un poste téléphonique (110) ayant une unité de base, un combiné, un cordon de combiné connectant le combiné à l'unité de base, et un dispositif de soulèvement de combiné électriquement réactif, comprenant les étapes consistant à :
a. connecter électriquement le combiné à l'unité de base via ledit cordon de combiné par le biais du dispositif de soulèvement ;
b. connecter électriquement un actionneur haut/bas de dispositif de soulèvement (185) dans ledit cordon de combiné,
**caractérisé en ce que** le dispositif de soulèvement est configuré pour détecter le signal dudit actionneur par l'intermédiaire de fils de signaux audio dans ledit cordon de combiné et ainsi soulever ou abaisser le combiné en réponse à celui-ci.

2. Procédé selon la revendication 1, incluant en outre l'étape consistant à : filtrer des signaux reçus par ledit dispositif de soulèvement arrivant par l'intermédiaire dudit combiné pour atténuer des signaux vocaux qui imiteraient le signal d'actionnement, de sorte que les signaux vocaux ne provoquent pas un faux actionnement dudit dispositif de soulèvement.

3. Procédé selon la revendication 2, dans lequel ladite étape de filtrage inclut l'étape consistant à shunter des signaux audio avant leur entrée dans ledit dispositif de soulèvement.

4. Procédé selon la revendication 2, dans lequel ladite étape de filtrage inclut le filtrage passe-bande de signaux audio.

5. Procédé selon la revendication 2, dans lequel ladite étape de filtrage inclut un circuit retardateur pour rejeter des signaux transitoires qui apparaissent pendant le retard temporel.

6. Procédé selon la revendication 5, dans lequel ladite étape de filtrage inclut une fenêtre temporelle dans laquelle le dispositif de soulèvement peut détecter un signal d'actionnement.

7. Procédé selon la revendication 1, incluant en outre l'étape consistant à configurer le dispositif de soulèvement pour rejeter tout signal ne satisfaisant pas des critères spécifiques d'actionnement.

8. Procédé selon la revendication 7, dans lequel lesdits critères spécifiques sont des signaux qui ne sont généralement pas plus courts qu'un premier temps prédéterminé et pas plus long qu'un second intervalle de temps prédéterminé.

9. Procédé selon la revendication 7, dans lequel lesdits critères spécifiques sont des premiers signaux qui ne sont généralement pas plus courts qu'un premier temps prédéterminé et pas plus long qu'un second intervalle de temps prédéterminé, pour initier un ordre d'actionnement dudit dispositif de soulèvement dans une direction et un second signal de longueur supérieure audit second temps prédéterminé pour actionner ledit dispositif de soulèvement dans une autre direction.

10. Système de rééquipement d'un poste téléphonique (110) pour actionner un dispositif de soulèvement de combiné à distance, ledit poste téléphonique ayant une unité de base, un combiné, un cordon de combiné configuré pour acheminer des signaux audio entre ladite unité de base et ledit combiné, et un dispositif de soulèvement, comprenant :
un actionneur haut/bas de dispositif de soulèvement configuré pour délivrer un signal d'actionnement audit dispositif de soulèvement, ladite unité étant configurée pour transmettre ledit signal d'actionnement le long de fils de signaux audio dans ledit cordon de combiné ;
**caractérisé par** un capteur connecté audit dispositif de soulèvement et en circuit avec lesdits fils dans ledit cordon de combiné, pour détecter ledit signal d'actionnement provenant dudit actionneur et configuré pour rejeter des signaux audio acheminés sur ledit fil, et faire passer ledit signal d'actionnement jusqu'audit dispositif de soulèvement pour décrocher et raccrocher le combiné en réponse audit actionneur haut/bas de dispositif de soulèvement.

11. Système selon la revendication 10, dans lequel ledit capteur dans ledit dispositif de soulèvement inclut un filtre passe-bande.

12. Système selon la revendication 11, dans lequel ledit capteur inclut un filtre qui fait passer une impulsion généralement non supérieure à un temps prédéterminé pour bloquer des signaux transitoires.

13. Système selon la revendication 10, dans lequel ledit capteur inclut un premier filtre capable de détecter un retard temporel minimal prédéterminé pour rejeter des signaux d'une durée plus courte que ledit retard et une seconde durée de signal maximale pour rejeter les signaux de durée plus longue qu'un second intervalle de temps maximal prédéterminé, de sorte que seuls les signaux d'une durée comprise dans lesdits temps minimal et maximal prédéterminés seront passés audit dispositif de soulèvement.

14. Système selon la revendication 10, dans lequel ledit capteur inclut un premier filtre capable de détecter un retard temporel minimal prédéterminé pour rejeter des signaux d'une durée plus courte que ledit retard et une seconde durée de signal maximale pour actionner ledit dispositif de soulèvement dans une direction en réponse à un signal plus long que ledit minimum et plus court que ledit maximum, et un second filtre pour actionner ledit dispositif de soulèvement dans une autre direction pour des signaux plus longs que ledit maximum, de sorte que des signaux d'une durée différente entraîneront l'actionnement sélectif vers le haut et vers le bas du dispositif de soulèvement en réponse à la durée de signal.

15. Système selon la revendication 14, dans lequel ledit temps minimal est généralement de 20 ms et ledit temps maximal n'est généralement pas supérieur à 200 millisecondes.
